# EUROPEAN PATENT SPECIFICATION

(11) **EP 1 095 214 B1**
(45) Date of publication and mention of the grant of the patent: **22.05.2002**
(21) Application number: 99929968.8
(22) Date of filing: 30.06.1999
(51) Int. Cl.: F02M 21/02, F02D 19/02

(54) **FUEL SYSTEM FOR LIQUEFIED GAS**
BRENNSTOFFSYSTEM FÜR FLÜSSIGGAS
SYSTEME D'ALIMENTATION EN CARBURANT POUR GAZ LIQUEFIE

(30) Priority: 30.06.1998 NL 1009528
(43) Date of publication of application: 02.05.2001
(73) Proprietor: Vialle Beheer B.V., 5602 JB Eindhoven (NL)
(72) Inventor: JAASMA, Servatius, Alfons, Maria, NL-5627 TE Eindhoven (NL)
(74) Representative: Jorritsma, Ruurd
(86) International application number: NL9900404
(87) International publication number: WO0000732

(56) References cited:
- WO-A-92/08886
- US-A- 5 291 869
- US-A- 5 479 906
- US-A- 5 623 907

## Description

The present invention relates to a fuel system for an internal combustion engine driven by liquefied gas, comprising a storage tank for the liquefied gas, a pump in communication with the contents of said storage tank, to which pump a supply line is connected, which supply line is connected at the other end to at least one injector for injecting liquefied gas into said engine, pressure control means being present which control the rise in pressure provided by the pump in the supply line and comprise a control unit.

A system of this type is disclosed in JP 60-222550A. In this known system the pressure in the supply line is raised by a constant value above the tank pressure. Raising the pressure with the aid of a pump is necessary in order to prevent premature vaporisation of the liquid gas, such as LPG. After all, vapour bubbles give rise to disruption of the operation of the engine because the amount of fuel introduced falls dramatically, as a result of which there is no longer an ignitable mixture present. At higher temperature the pressure in the tank increases and by controlling the fitted pressure controller as a function of this raised pressure, the added pressure remains constant. Another publication in which this is described is Japanese Patent Application 62-243956A.

Appreciable demands are imposed on the injectors used for injection in internal combustion engines. After all, the range over which such injectors have to function is becoming increasingly wider as the power of such engines becomes increasingly higher and the idling consumption of such engines becomes ever lower. This range is between idling and maximum power. This maximum power is achieved at relatively high revs, so that the time for injection is relatively short.

This means that appreciable demands are imposed on the dynamic range of such injectors. This dynamic range is indicated by the so-called turn down ratio, which is the quotient of the maximum flow to be delivered and the minimum flow to be delivered. These demands can be met for injectors for petrol engines where the pressure on the fuel rail, that is to say the supply line, is essentially constant. When liquefied gas is injected this dynamic range is even further increased because the pressure in the supply line varies in the absolute sense. As described above, the pressure in the storage tank will vary as a function of the temperature, and as a result of the coupling of the absolute pressure in the supply system with the absolute pressure in the tank this pressure will also vary. As a result demands are imposed on the dynamic characteristics of the injector which are impossible to meet or virtually impossible to meet. In the case of petrol engines, where there is individual injection for each cylinder, the length of the inlet pipes for the cylinder concerned is often chosen to be so long that injected petrol is never able to move to another inlet of another cylinder, as a result of which the injection cycle for a four-stroke engine can be 720°, that is to say virtually continuous. However, because of environmental considerations, in recent years there has been increasing use of sequential injection, with which injection takes place only during the actual movement of the column of air through the inlet line, that is to say the time during which the inlet valve is open. According to even more recent developments, this range is even further reduced in order to optimise combustion. The consequence of all of this is that the time available for injection is decreasing and increasingly more stringent demands are being imposed on injectors.

US Patent 5 479 906 discloses a fuel system for fuel in vapour form. With this system some of the fuel is introduced by injectors. This is effected via a pump, a return line being fitted. Fuel injection takes place with the fuel in the liquid phase. To prevent the temperature in the tank rising too much as a consequence of the work performed in the pump, it is proposed to make a bleed line on the top of the fuel tank, by means of which bleed line fuel in vapour form can be introduced into the inlet channel of the combustion engine. As a result of the transition from liquid to vapour in the tank, the temperature of the tank falls. It is stated that the pressure in the fuel supply rail for the injectors can be controlled as a function of the desired outlet pressure. If the pressure in the tank rises, liquid in the tank will vaporise, just as in the case when the temperature rises in the tank, and will be combusted via the separate circuit.

It is known from PCT application WO 92/08886 to keep the pressure difference between tank and injector line constant.

The aim of the present invention is to be able to implement modern systems of this type using existing injectors which are largely based on petrol/diesel engine technology, that is to say have a corresponding dynamic range. In other words, the aim is to use injectors of restricted dynamic range and still to inject liquefied fuel into internal combustion engines.

This aim is realised with a fuel system as described above in that the pressure control means are designed such that said pressure rise decreases as the absolute pressure in said tank increases.

By means of this measure the variation in the absolute pressure in the supply line is appreciably less, as a result of which a more restricted dynamic range of the injector or injectors can suffice. In contrast to the prior art, where, for example, a constant pressure rise of, for example, 5 atmospheres, was generated by the pump, according to the invention said pressure rise will vary, for example as a function of the temperature. If the temperature is high, that is to say the pressure inside the storage tank is high, the absolute pressure rise will be relatively low, whilst at a lower temperature, that is to say lower pressure in the tank, the pressure rise will be greater. It will be understood that the various features are so implemented that there is no risk of vapour bubble formation in the supply line or injectors even at the highest temperature, that is to say the lowest pressure rise. This also applies in the case of special operating conditions, such as switching off a combustion engine, where switching off must be able to be achieved in a computer-controlled manner within a very short time.

In contrast to US Patent 5 479 906, according to the invention a pressure rise produced by the pump is reduced if the absolute pressure in the tank rises. In US Patent 5 479 906 an additional quantity of liquid is vaporised when the pressure is too high and, if necessary, correction of the operation of the fuel pump takes place in order to achieve a desired outlet pressure.

Furthermore, with the fuel system according to the invention it is possible to restrict or even to eliminate the temperature rise in the storage tank for liquid LPG. Such a temperature rise is caused by the heat introduced into the tank by pumping round the fluid from the tank. Moreover, the dynamic range is improved with the fuel system according to the invention described above.

It is possible to produce a variable pressure rise according to the invention in any way known from the prior art.

According to a first preferred embodiment of the invention, a pressure regulator that can be controlled externally is fitted in the return line downstream of the injectors. The basic setting of the pressure regulator is regulated as a function of the temperature detected in the fuel tank. It is, of course, also possible, to determine pressure differences by detecting the pressure in the tank as well as the ambient pressure.

According to a further variant, a permanently open restriction is incorporated in the return line or the latter itself has an appreciable resistance. The pressure in the supply line is then regulated by regulating the flow of the quantity of fuel. Optionally, the various features can be combined with a pressure regulator. Such a combination will frequently be encountered because a non-return valve is fitted in the opening from the return line to the tank, which non-return valve acts as a restriction. According to a preferred embodiment this is possible by varying the output of the pump and more particularly by varying the speed of revolution of the fuel pump.

According to a further advantageous embodiment of the invention, the injector is an injector controlled by pulse width.

The invention will be explained in more detail below with reference to illustrative embodiments shown in the drawing. In the drawing:
Fig. 1 shows, diagrammatically, a first embodiment of the fuel system according to the invention;
Fig. 2 shows in detail the regulator shown diagrammatically in Fig. 1; and
Fig. 3 shows a further variant, shown highly diagrammatically, of the fuel system according to the invention.

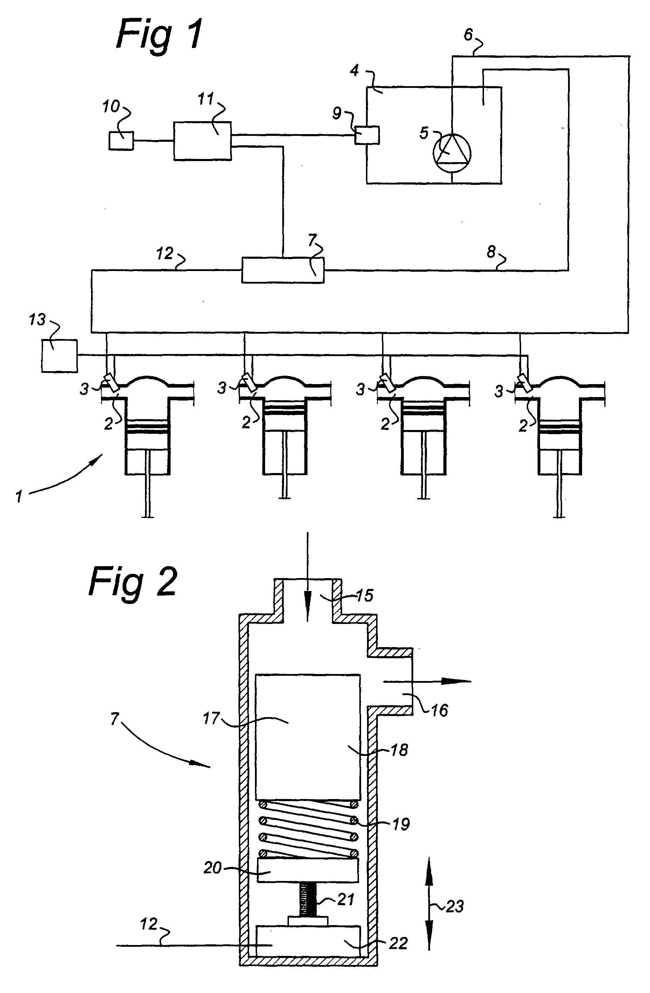

In Fig. 1 an internal combustion engine is indicated in its entirety by 1. The inlet pipes 2 of the engine are shown, in which injectors 3 for sequential injection are shown. These injectors are controlled by a control unit 13, to which information with regard to the power demand is provided in a manner which is not shown and to which engine parameters such as temperature and the like are also fed. Such a control unit is generally known in the prior art in combination with injectors 3. Injectors 3 are provided via supply line 6 with LPG from storage tank 4, in which a pump 5 is fitted. A return line 8, in which a pressure regulator 7 is accommodated, is connected to the injectors. This pressure regulator 7 is connected via an electric lead 12 to a control unit 11. Signals relating to the absolute pressure originating from sensor 9 in tank 4 and the ambient pressure 10 are fed to control unit 11.

With this arrangement, according to the invention control unit 11 is so constructed that if the pressure detected by sensor 9 rises with a constant take-off by injectors 13, pressure regulator 7 allows more fuel to pass through. That is to say the absolute pressure rise caused by pump 5 is partly negated by the rise in the pressure inside the tank 4. An example of such a pressure regulator is shown in Fig. 2. The inlet is indicated by 15 and the outlet by 16. Inside housing 18 there is a displaceable piston 17 which controls communication between inlet 15 and outlet 16. Piston 17 is under the pressure of spring 19, one end of which bears on cup 20.

The position of cup 20 is variable in the direction of arrow 23 by means of a threaded rod 21 which is coupled to a rotary motor 22 which is connected to lead 12. By moving cup 20 upwards the rise in pressure between inlet 15 and outlet 16 will increase. Such a pressure regulator can either have been incorporated in the return line 8 or have been incorporated at the end thereof in tank 4. Furthermore, special measures can have been taken in order as far as possible to limit the noise that is produced when LPG escapes in the tank.

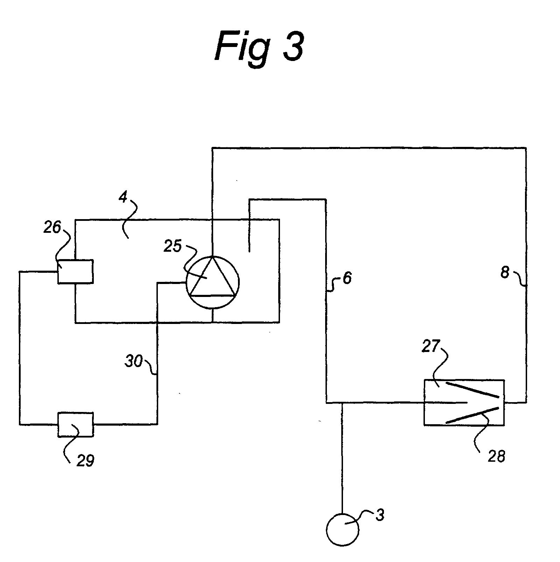

A further variant of the invention is shown in Fig. 3. In this figure the components which correspond to those shown in Figs 1 and 2 have been provided with the same reference numerals. The internal combustion engine is also not shown. The pump fitted in the tank 4 is now indicated by 25. The speed of revolution of said pump is adjustable, this being controlled by control unit 29 which is connected to said pump via line 30. The speed of revolution is dependent on the signal that is produced by temperature sensor 26, which is fitted in the tank.

After all, it has been found that the pressure inside the tank can be determined accurately from the temperature therein. A pressure regulator 27, which has only one restriction 28, is now incorporated in the return line 8. In fact, the pressure regulation is determined by the output of motor 25 in interaction with opening 28 (and, of course, the take-off via injectors 3). With this arrangement the control unit is designed such that on raising the temperature in the tank, that is to say on raising the pressure thereof, the pump has a lower output, as a result of which although the absolute pressure in line 6 increases, the difference between the pressure in line 6 and tank 4 falls.

An example of the absolute pressure in the supply line 6 as a function of the absolute pressure in the tank will be given below.

**Table 1**

| Pressure in tank bar | Pressure at injector bar | Increase in pressure bar |
|---|---|---|
| 2 | 10 | 8 |
| 10 | 16 | 6 |
| 25 | 29 | 4 |

It can be seen from the above table that when the pressure in the tank increases the pressure difference between line 6 and storage tank 4 decreases.

Of course, the various aspects are so chosen that no vapour formation can take place in the supply line or injectors even under the most adverse conditions.

It will be understood from the above that the inventive concept can be implemented in a wide variety of ways. For instance, it is possible to work with more than one pump. Moreover, correction means can be present to provide for correction of the reduced pressure that is present in the suction pipes. It is also possible to construct the pressure regulator from a series circuit of a controller with a fixed setting, over which, for example, a pressure difference of 4 bar is achieved, and a fixed restriction, over which a pressure difference of 0 to 5 bar is achieved. Such systems fall within the scope of the appended claims.

## Claims

1. Fuel system for an internal combustion engine (1) driven by liquefied gas, comprising a storage tank (4) for the liquefied gas, a single fuel supply line which is the only feed for the internal combustion engine to which a pump (5, 25) is connected, in communication with the contents of the storage tank, which supply line is connected at the other end to at least one injector (3) for injecting liquefied gas into said engine, pressure control means (7, 11; 27, 29) being present which control the rise in pressure provided by the pump in the supply line and comprise a control unit, **characterised in that** the pressure control means are designed such that said pressure rise decreases as the absolute pressure in said tank increases.

2. Fuel system according to Claim 1, wherein said injector (3) is provided with a return line (8) to said tank and said pressure control means (7, 27) are arranged in said return line.

3. Fuel system according to Claim 2, wherein said pressure control means comprise a fixed restriction (28) in said return line (8) as well as a control unit (29) which influences the output of said pump (25).

4. Fuel system according to Claim 3, wherein the speed of revolution of said pump (25) is controllable.

5. Fuel system according to one of the preceding claims, wherein said rise in pressure is at least 8 bar when the pressure in the tank is ∼ 1 to 2 atmospheres and said rise in pressure is at most 4 bar when the pressure in the tank is 25 atmospheres.

6. Fuel system according to one of the preceding claims, wherein said rise in pressure is derived from a signal originating from a temperature sensor (9) fitted in said tank.

7. Fuel system according to one of the preceding claims, wherein said injector comprises an injector controlled by pulse width.

8. Fuel system according to one of the preceding claims, wherein the pressure control means comprise a series circuit of a regulator having a fixed setting plus a fixed restriction.

## Patentansprüche

1. Kraftstoffsystem für einen durch Flüssiggas getriebenen Verbrennungsmotor (1), umfassend einen Vorratstank (4) für das Flüssiggas, eine einzige Kraftstoffversorgungsleitung, die die einzige Zuführung für den Verbrennungsmotor ist, mit der eine mit dem Inhalt des Vorratstanks in Verbindung stehende Pumpe (5,25) verbunden ist, welche Versorgungsleitung am anderen Ende mit mindestens einer Einspritzeinrichtung (3) zum Einspritzen von Flüssiggas in den Motor verbunden ist, wobei Drucksteuereinrichtungen (7,11;27,29) vorhanden sind, welche die durch die Pumpe in der Versorgungsleitung gelieferte Druckerhöhung steuern und eine Steuereinheit umfassen, **dadurch gekennzeichnet, dass** die Drucksteuereinrichtungen so konstruiert sind, dass die Druckerhöhung abnimmt, wenn der absolute Druck in dem Tank ansteigt.

2. Kraftstoffsystem nach Anspruch 1, bei dem die Einspritzeinrichtung (3) mit einer Rückführleitung (8) zu dem Tank versehen ist und die Drucksteuereinrichtungen (7,27) in der Rückführleitung angeordnet sind.

3. Kraftstoffsystem nach Anspruch 2, bei dem die Drucksteuereinrichtungen eine feste Drossel (28) in der Rückführleitung (8) umfassen sowie eine Steuereinheit (29), die die Förderleistung der Pumpe (25) beeinflusst.

4. Kraftstoffsystem nach Anspruch 3, bei dem die Umdrehungsgeschwindigkeit der Pumpe (25) steuerbar ist.

5. Kraftstoffsystem nach einem der vorangehenden Ansprüche, bei dem die Druckerhöhung mindestens 8 Bar beträgt, wenn der Druck im Tank ∼ 1 bis 2 Atmosphären beträgt, und die Druckerhöhung höchstens 4 Bar beträgt, wenn der Druck im Tank 25 Atmosphären beträgt.

6. Kraftstoffsystem nach einem der vorangehenden Ansprüche, bei dem die Druckerhöhung von einem Signal abgeleitet ist, das von einem in dem Tank angebrachten Temperatursensor (9) stammt.

7. Kraftstoffsystem nach einem der vorangehenden Ansprüche, bei dem die Einspritzeinrichtung eine durch Pulsbreite gesteuerte Einspritzeinrichtung umfasst.

8. Kraftstoffsystem nach einem der vorangehenden Ansprüche, bei dem die Drucksteuereinrichtungen eine Reihenschaltung aus einem Regler mit einer festen Einstellung und einer festen Drossel umfassen.

## Revendications

1. Système d'alimentation en combustible pour un moteur à combustion interne (1) entraîné par du gaz liquéfié, comprenant un réservoir de stockage (4) pour le gaz liquéfié, une unique ligne d'alimentation en combustible qui est la seule alimentation pour le moteur à combustion interne à laquelle une pompe (5, 25) est raccordée, en communication avec le contenu du réservoir de stockage, laquelle ligne d'alimentation est raccordée, à l'autre extrémité, à au moins un injecteur (3) servant à injecter le gaz liquéfié dans ledit moteur, des moyens de régulation de pression (7, 11 ; 27, 29) étant prévus pour réguler l'augmentation de pression réalisée par la pompe dans la ligne d'alimentation et comprenant une unité de commande, **caractérisé en ce que** les moyens de régulation de pression sont conçus de telle sorte que l'augmentation de pression diminue au fur et à mesure qu'augmente la pression absolue à l'intérieur dudit réservoir.

2. Système d'alimentation en combustible selon la revendication 1, dans lequel ledit injecteur (3) est pourvu d'une ligne de retour (8) vers ledit réservoir, et lesdits moyens de régulation de pression (7, 27) sont placés dans ladite ligne de retour.

3. Système d'alimentation en combustible selon la revendication 2, dans lequel lesdits moyens de régulation de pression comprennent un étranglement fixe (28) dans ladite ligne de retour (8), ainsi qu'une unité de commande (29), qui influence la sortie de ladite pompe (25).

4. Système d'alimentation en combustible selon la revendication 3, dans lequel la vitesse de rotation de ladite pompe (25) est réglable.

5. Système d'alimentation en combustible selon l'une quelconque des revendications précédentes, dans lequel ladite augmentation de pression est d'au moins 8 bars lorsque la pression à l'intérieur du réservoir est d'environ 1 à 2 atmosphères, et ladite augmentation de pression est d'au plus 4 bars lorsque la pression à l'intérieur dudit réservoir est de 25 atmosphères.

6. Système d'alimentation en combustible selon l'une quelconque des revendications précédentes, dans lequel ladite augmentation de pression est déduite d'un signal provenant d'un capteur de température (9) installé sur ledit réservoir.

7. Système d'alimentation en combustible selon l'une quelconque des revendications précédentes, dans lequel ledit injecteur comprend un injecteur commandé par durée d'impulsion.

8. Système d'alimentation en combustible selon l'une quelconque des revendications précédentes, dans lequel les moyens de régulation de pression comprennent un circuit série d'un régulateur ayant un réglage fixe plus un étranglement fixe.
